(19) Europäisches Patentamt
European Patent Office
Office européen des brevets

(11) EP 3 354 675 B1

(12) EUROPEAN PATENT SPECIFICATION

(45) Date of publication and mention of the grant of the patent:
**20.07.2022 Bulletin 2022/29**

(21) Application number: **16848607.4**

(22) Date of filing: **21.09.2016**

(51) International Patent Classification (IPC):
***C08G 61/08*** *(2006.01)* ***B60C 1/00*** *(2006.01)*
***C08K 3/36*** *(2006.01)* ***C08L 65/00*** *(2006.01)*

(52) Cooperative Patent Classification (CPC):
(C-Sets available)
**C08G 61/06; B60C 1/00; C08G 61/08; C08K 3/36; C08L 65/00;** C08G 2261/3321; C08G 2261/3325; C08G 2261/418; C08G 2261/60; C08G 2261/62; C08G 2261/76 (Cont.)

(86) International application number:
**PCT/JP2016/077811**

(87) International publication number:
**WO 2017/051819 (30.03.2017 Gazette 2017/13)**

(54) **CYCLOPENTENE RING-OPENED COPOLYMER**

RINGOFFENES CYCLOPENTEN-COPOLYMER

COPOLYMÈRE À CYCLE OUVERT DE CYCLOPENTÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2015 JP 2015186467**

(43) Date of publication of application:
**01.08.2018 Bulletin 2018/31**

(73) Proprietor: **Zeon Corporation**
**Tokyo 100-8246 (JP)**

(72) Inventors:
- **NITADORI, Hiroyuki**
  **Tokyo 100-8246 (JP)**
- **OKUNO, Shingo**
  **Tokyo 100-8246 (JP)**
- **KURAMOTO, Naoaki**
  **Tokyo 100-8246 (JP)**
- **SUGIMURA, Takeshi**
  **Tokyo 100-8246 (JP)**

(74) Representative: **Maiwald Patent- und Rechtsanwaltsgesellschaft mbH**
**Elisenhof**
**Elisenstraße 3**
**80335 München (DE)**

(56) References cited:

| | |
|---|---|
| **EP-A1- 2 963 074** | **WO-A1-2014/133028** |
| **GB-A- 2 014 588** | **JP-A- S5 075 700** |
| **JP-A- S5 594 928** | **JP-A- 2002 220 440** |
| **JP-A- 2011 126 966** | **US-A- 3 778 420** |

- **ZHEN YAO ET AL: "Ring-opening metathesis copolymerization of dicyclopentadiene and cyclopentene through reaction injection molding process", JOURNAL OF APPLIED POLYMER SCIENCE, vol. 125, no. 4, 15 August 2012 (2012-08-15), pages 2489-2493, XP055579769, US ISSN: 0021-8995, DOI: 10.1002/app.36359**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/36, C08L 65/00**

**Description**

TECHNICAL FIELD

The present invention relates to a cyclopentene ring-opening copolymer, more particularly relates to a cyclopentene ring-opening copolymer capable of giving a cross-linked rubber excellent in strength at break and abrasion resistance. Further, the present invention relates to a rubber composition obtained by using such a cyclopentene ring-opening copolymer, and a cross-linked rubber and a tire obtained by using the rubber composition.

BACKGROUND ART

In general, as is well known, a metathesis ring-opening polymerization of cyclopentene in the presence of a so-called Ziegler-Natta catalyst composed of a compound of a transition metal of Group VI of the Periodic Table such as $WCl_6$ or $MoCl_5$ and an organometallic activator such as triisobutylaluminum, diethylaluminum chloride, or tetrabutyltin gives unsaturated linear ring-opening polymer. Such a ring-opening polymer of cyclopentene exhibits excellent rubber properties, and accordingly has been suitably used as a rubber for tire.

For example, Patent Document 1 discloses a cyclopentene ring-opening copolymer which is a ring-opening copolymer composed of cyclopentene and a norbornene compound, and in which in relation to the whole of the repeating structural units in the copolymer, the content of the structural unit derived from cyclopentene is 40 to 90 wt%, and the content of the structural unit derived from a norbornene compound is 10 to 60 wt%, and the weight average molecular weight (Mw) is 200,000 to 1,000,000.

According to the technique of Patent Document 1, by ring-opening copolymerizing a norbornene compound with cyclopentene, it is made possible to improve the wet grip property and the low heat buildup property of the obtained cross-linked rubber. However, the cross-linked rubber obtained by the technique of Patent Document 1 is insufficient in strength at break, and accordingly, there has been desired a further improvement of the strength at break in order to meet the recent requirement for achieving high performance of automobile tires.

RELATED ART DOCUMENTS

PATENT DOCUMENT

Patent Document 1: International Publication No. WO 2014/133028

SUMMARY OF THE INVENTION

PROBLEM TO BE SOLVED BY THE INVENTION

The present invention was made in view of such a circumstance, and an object of the present invention is to provide a cyclopentene ring-opening copolymer capable of giving a cross-linked rubber excellent in strength at break and abrasion resistance, and a rubber composition obtained by using such a cyclopentene ring-opening copolymer, and a cross-linked rubber and a tire obtained by using the rubber composition.

MEANS FOR SOLVING THE PROBLEM

The present inventors engaged in a diligent study to achieve the above object, and consequently have perfected the present invention by discovering that according to a cyclopentene ring-opening copolymer including structural units derived from norbornene compounds with three or more rings in predetermined proportions in the cyclopentene ring-opening copolymer, a cross-linked rubber obtained by using the cyclopentene ring-opening copolymer is excellent in strength at break and abrasion resistance, in addition to the improvement effect of the wet grip property and the low heat buildup property obtained by copolymerizing a norbornene compound with cyclopentene.

In other words, the present invention provides a cyclopentene ring-opening copolymer comprising a structural unit derived from cyclopentene and a structural unit derived from a norbornene compound with three or more rings, wherein the structural unit derived from a norbornene compound with three or more rings is a structural unit derived from the compound represented by the following formula (2):

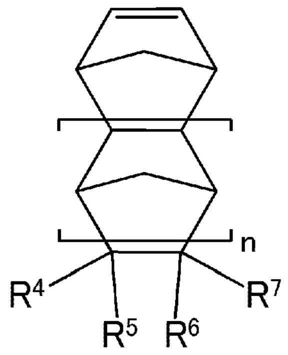

(2)

wherein, in the general formula (2), $R^4$ to $R^7$ each independently represent a hydrogen atom, a halogen atom, an optionally substituted hydrocarbon group having 1 to 20 carbon atoms, or a substituent containing a silicon atom, an oxygen atom or a nitrogen atom; $R^4$ and $R^6$, $R^4$ and $R^5$ and/or $R^6$ and $R^7$ may be bonded to each other to form a ring; and n is 1 or 2; and

wherein the content of the structural unit derived from the norbornene compound with three or more rings falls within a range from 40 to 80 wt% in relation to the whole of the repeating structural units in the cyclopentene ring-opening copolymer.

In the cyclopentene ring-opening copolymer of the present invention, the glass transition temperature is preferably -80 to 0°C, as determined by means of differential scanning calorimetry (DSC) at a temperature increase rate of 10 °C/min.

The content of aromatic rings in relation to the whole of the cyclopentene ring-opening copolymer is preferably 0 to 40 wt%.

Further, the cyclopentene ring-opening copolymer of the present invention preferably has a modifying group at the polymer chain end and the modifying group is more preferably an oxysilyl group.

Further, the present invention provides a rubber composition comprising the cyclopentene ring-opening copolymer and silica.

The rubber composition of the present invention further comprises a cross-linking agent.

Further the present invention provides a cross-linked rubber prepared by cross-linking the rubber composition and a tire comprising the cross-linked rubber.

EFFECTS OF INVENTION

The present invention can provide a cyclopentene ring-opening copolymer capable of giving a cross-linked rubber excellent in strength at break and abrasion resistance, and a rubber composition obtained by using such a cyclopentene ring-opening copolymer, and a cross-linked rubber and a tire obtained by using the rubber composition. In particular, the present invention can improve the strength at break and the abrasion resistance, in addition to the improvement effect of the wet grip property and the low heat buildup property obtained by copolymerizing a norbornene compound with cyclopentene.

DESCRIPTION OF EMBODIMENTS

<Cyclopentene Ring-Opening Copolymer>

The cyclopentene ring-opening copolymer of the present invention is obtained by ring-opening polymerizing cyclopentene and a norbornene compound with three or more rings, and is a cyclopentene ring-opening copolymer including a structural unit derived from cyclopentene and a structural unit derived from a norbornene compound with three or more rings, wherein the structural unit derived from a norbornene compound with three or more rings is a structural unit derived from the compound represented by the following formula (2):

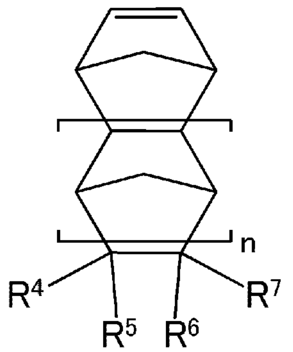

(2)

wherein, in the general formula (2), $R^4$ to $R^7$ each independently represent a hydrogen atom, a halogen atom, an optionally substituted hydrocarbon group having 1 to 20 carbon atoms, or a substituent containing a silicon atom, an oxygen atom or a nitrogen atom; $R^4$ and $R^6$, $R^4$ and $R^5$ and/or $R^6$ and $R^7$ may be bonded to each other to form a ring; and n is 1 or 2; and
wherein the content of the structural unit derived from the norbornene compound with three or more rings falls within a range from 40 to 80 wt% in relation to the whole of the repeating structural units in the cyclopentene ring-opening copolymer.

The norbornene compound with three or more rings used in the present invention is not particularly limited as long as the norbornene compound with three or more rings is a compound having a ring structure with three or more rings including a norbornene ring as defined above; the norbornene compound with three or more rings used in the present invention is preferably a norbornene compound having three to six ring structures, and more preferably a norbornene compound having three or four ring structures.

Note that, according to the discovery of the present inventors, when as a norbornene compound, a norbornene compound having two ring structures (for example, 2-norbornene) is used, the improvement effects of the strength at break and the abrasion resistance are small; when the content of the norbornene compound having two ring structures is increased in order to improve the strength at break and the abrasion resistance, because the polymer Mooney viscosity is increased, the processability of the copolymer is made poor, and because the content of the double bond in the copolymer is increased, the copolymer tends to be oxidized and deteriorated. On the other hand, when a norbornene compound with three or more rings is used, and the content of the structural unit derived from a norbornene compound with three or more rings is set to be 40 to 80 wt%, the strength at break and the abrasion resistance can be effectively improved, in addition to the improvement effects of the wet grip property and the low heat buildup property obtained by copolymerizing a norbornene compound with cyclopentene.

A norbornene compound with three or more rings means a compound including a norbornene ring and rings condensed with the norbornene ring; examples of the norbornene compound with three or more rings include a norbornene compound having a hetero ring condensed with the norbornene ring, and a norbornene compound having a condensed ring between a norbornene ring and a hydrocarbon ring; of these, the norbornene compound having a condensed ring between a norbornene ring and a hydrocarbon ring is preferable because such a norbornene compound can make the effect of the present invention further remarkable.

Examples (not being part of the invention as claimed) of the norbornene compound having a hetero ring condensed with a norbornene ring include norbornene-5,6-dicarboxylic acid anhydride, and norbornene-5,6-dicarboxylic acid imide.

Examples of the norbornene compound having a condensed ring between a norbornene and a hydrocarbon ring include the compound represented the following general formula (2):

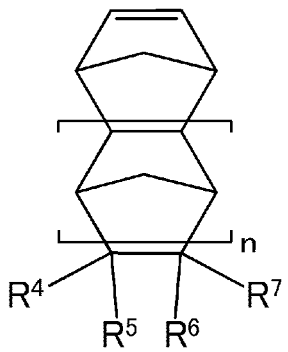

(2)

In the general formula (2), $R^4$ to $R^7$ each independently represent a hydrogen atom, a halogen atom, an optionally substituted hydrocarbon group having 1 to 20 carbon atoms, or a substituent containing a silicon atom, an oxygen atom or a nitrogen atom; $R^4$ and $R^6$, $R^4$ and $R^5$ and/or $R^6$ and $R^7$ may be bonded to each other to form a ring; and n is 1 or 2.

Specific examples of the compound represented by the general formula (2) include: unsubstituted or hydrocarbon substituent-containing tetracyclo[6.2.1.1$^{3,6}$.0$^{2,7}$]dodec-4-enes such as tetracyclo[6.2.1.1$^{3,6}$.0$^{2,7}$]dodec-4-ene, 9-methyltetracyclo[6.2.1.1$^{3,6}$.0$^{2,7}$]dodec-4-ene, 9-ethyltetracyclo[6.2.1.1$^{3,6}$.0$^{2,7}$]dodec-4-ene, 9-cyclohexyltetracyclo[6.2.1.1$^{3,6}$.0$^{2,7}$]dodec-4-ene, 9-cyclopentyltetracyclo[6.2.1.1$^{3,6}$.0$^{2,7}$]dodec-4-ene, 9-methylenetetracyclo[6.2.1.1$^{3,6}$.0$^{2,7}$]dodec-4-ene, 9-ethylidenetetracyclo[6.2.1.1$^{3,6}$.0$^{2,7}$] dodec-4-ene, 9-vinyltetracyclo[6.2.1.1$^{3,6}$.0$^{2,7}$]dodec-4-ene, 9-propenyltetracyclo[6.2.1.1$^{3,6}$.0$^{2,7}$]dodec-4-ene, 9-cyclohexenyltetracyclo[6.2.1.1$^{3,6}$.0$^{2,7}$]dodec-4-ene, 9-cyclopentenyltetracyclo[6.2.1.1$^{3,6}$.0$^{2,7}$]dodec-4-ene, and 9-phenyltetracyclo[6.2.1.1$^{3,6}$.0$^{2,7}$]dodec-4-ene;

alkoxycarbonyl group-containing tetracyclo[6.2.1.1$^{3,6}$.0$^{2,7}$]dodec-4-enes such as methyl tetracyclo[6.2.1.1$^{3,6}$.0$^{2,7}$] dodec-9-ene-4-carboxylate, and methyl 4-methyltetracyclo[6.2.1.1$^{3,6}$.0$^{2,7}$]dodec-9-ene-4F-carboxylate;
hydroxycarbonyl group or acid anhydride group-containing tetracyclo[6.2.1.1$^{3,6}$.0$^{2,7}$]dodec-4-enes such as tetracyclo[6.2.1.1$^{3,6}$.0$^{2,7}$]dodec-9-ene-4-carboxylic acid, tetracyclo[6.2.1.1$^{3,6}$.0$^{2,7}$]dodec-9-ene-4, 5-dicarboxylic acid, and tetracyclo[6.2.1.1$^{3,6}$.0$^{2,7}$]dodec-9-ene-4, 5-dicarboxylic acid anhydride;
hydroxyl group-containing tetracyclo[6.2.1.1$^{3,6}$.0$^{2,7}$]dodec-4-enes such as tetracyclo[6.2.1.1$^{3,6}$.0$^{2,7}$]dodec-9-ene-4-methanol, and tetracyclo[6.2.1.1$^{3,6}$.0$^{2,7}$]dodec-4-ene-9-ol;
hydrocarbonyl group-containing tetracyclo[6.2.1.1$^{3,6}$.0$^{2,7}$]dodec-4-enes such as tetracyclo[6.2.1.1$^{3,6}$.0$^{2,7}$]dodec-9-ene-4-carbaldehyde;
carbonyloxy group-containing tetracyclo[6.2.1.1$^{3,6}$.0$^{2,7}$]dodec-4-enes such as 9-tetracyclo[6.2.1.1$^{3,6}$.0$^{2,7}$]dodeca-4-enyl acetate, 9-tetracyclo[6.2.1.1$^{3,6}$.0$^{2,7}$]dodeca-4-enyl acrylate, and 9-tetracyclo[6.2.1.1$^{3,6}$.0$^{2,7}$]dodeca-4-enyl methacrylate;
nitrogen atom-containing functional group-including tetracyclo[6.2.1.1$^{3,6}$.0$^{2,7}$]dodec-4-enes such as tetracyclo[6.2.1.1$^{3,6}$.0$^{2,7}$]dodec-9-ene-4-carbonitrile, tetracyclo[6.2.1.1$^{3,6}$.0$^{2,7}$]dodec-9-ene-4-carboxamide, and tetracyclo[6.2.1.1$^{3,6}$.0$^{2,7}$]dodec-9-ene-4, 5-dicarboxylic acid imide;
halogen atom-containing tetracyclo[6.2.1.1$^{3,6}$.0$^{2,7}$]dodec-4-enes such as 9-chlorotetracyclo[6.2.1.1$^{3,6}$.0$^{2,7}$]dodec-4-ene;
and silicon atom-containing functional group-including tetracyclo[6.2.1.1$^{3,6}$.0$^{2,7}$]dodec-4-enes such as 4-trimethoxysilyltetracyclo[6.2.1.1$^{3,6}$.0$^{2,7}$]dodec-4-ene, and 4-triethoxysilyltetracyclo[6.2.1.1$^{3,6}$.0$^{2,7}$]dodec-4-ene.

These norbornene compounds with three or more rings may be used each alone or in combinations of two or more thereof..

In the cyclopentene ring-opening copolymer of the present invention, in relation to the whole of the repeating structural units, the content of the structural unit derived from a norbornene compound with three or more rings is 40 to 80 wt%, preferably 40 to 70 wt%, and more preferably 40 to 60 wt%. When the content of the structural unit derived from a norbornene compound with three or more rings is too low, the obtained cross-linked rubber is poor in strength at break; on the other hand, when the content of the structural unit derived from a norbornene compound with three or more rings is too large, the polymer Mooney viscosity of the obtained cross-linked rubber is too high, and poor in processability.

In the cyclopentene ring-opening copolymer of the present invention, in relation to the whole of the repeating structural units, the content of the structural unit derived from cyclopentene is preferably 20 to 60 wt%, more preferably 30 to 60 wt%, and further preferably 40 to 60 wt%.

Further, the cyclopentene ring-opening copolymer of the present invention may be a copolymer obtained by

copolymerizing, in addition to cyclopentene and a norbornene compound with three or more rings, other monomers copolymerizable with cyclopentene and the norbornene compound with three or more rings. Examples of such other monomers include a monocyclic olefin other than cyclopentene, a monocyclic diene and a monocyclic triene. As the monocyclic olefin other than cyclopentene, cyclooctene is quoted as an example. As the monocyclic diene, 1,5-cyclooctadiene is quoted as an example. As the monocyclic triene, 1,5,9-cyclododecatriene is quoted as an example. In the cyclopentene ring-opening copolymer of the present invention, in relation to the whole of the repeating structural units, the content of the structural units derived from the other monomers is preferably 40 wt% or less, and more preferably 30 wt% or less; in the present invention, particularly preferably the structural units derived from the other monomers are substantially not included.

The weight average molecular weight (Mw) of the cyclopentene ring-opening copolymer of the present invention measured by gel permeation chromatography relative to polystyrene standards is preferably 10,000 to 1,000,000, more preferably 50,000 to 500,0000, and further preferably 80,000 to 400,000. By setting the weight average molecular weight (Mw) so as to fall within the above-described range, the production and the handleability preferably can be made good while the rubber properties are being made sufficient. The ratio (Mw/Mn) between the weight average molecular weight (Mw) and the number average molecular weight (Mn) of the cyclopentene ring-opening copolymer of the present invention, measured by gel permeation chromatography relative to polystyrene standards is preferably 1.0 to 5.0, and more preferably 1.5 to 2.5.

The glass transition temperature (Tg) of the cyclopentene ring-opening copolymer of the present invention is preferably -80 to 0°C, more preferably -60 to 0°C, and further preferably -50 to -5°C. By setting the glass transition temperature (Tg) so as to fall within the above-described range, the cross-linked rubber obtained by using the cyclopentene ring-opening copolymer of the present invention can be made excellent in strength at break and abrasion resistance. Note that the glass transition temperature of the cyclopentene ring-opening copolymer can be controlled by regulating the types and the amounts used of the norbornene compounds with three or more rings to be used.

Further, in the cyclopentene ring-opening copolymer of the present invention, the content of the aromatic rings in relation to the whole of the cyclopentene ring-opening copolymer is preferably 0 to 40 wt%, more preferably 0 to 30 wt% and further preferably 10 to 25 wt%. By setting the contents of the aromatic rings in the cyclopentene ring-opening copolymer so as to fall within the above-described range, the obtained cross-linked rubber can be made more excellent in strength at break and abrasion resistance. Note that in the present invention, the content of the aromatic rings is the value representing the weight proportion of the aromatic rings included in the cyclopentene ring-opening copolymer; for example, on the basis of "the weight proportion of the structural units including aromatic rings in relation to the whole of the repeating structural units" and "the weight proportion of the aromatic rings in the structural units including aromatic rings," the contents of the aromatic rings can be determined by, for example, the following formula:

Content of aromatic rings (%) = "the weight proportion of the structural units including aromatic rings in relation to the whole of the repeating structural units" (%) × "the weight proportion of the aromatic rings in the structural units including aromatic rings"(%)

Further, the cyclopentene ring-opening copolymer of the present invention preferably has a modifying group at a polymer chain end. By having such an end modifying group, the affinity to silica can be more enhanced; accordingly, the dispersibility of silica in the rubber composition can be enhanced when silica is mixed in the rubber composition; and consequently, the strength at break and the abrasion resistance in the case where a cross-linked rubber is obtained. The modifying group to be introduced into the polymer chain end is not particularly limited, but is preferably a group containing an atom selected from the group consisting of the atoms of Group 15 of the Periodic Table, the atoms of Group 16 of the Periodic Table, and a silicon atom.

From the viewpoint that the affinity to silica can be enhanced, and accordingly the strength at break and the abrasion resistance in the case of forming a cross-linked rubber can be made better, the modifying group for forming the end modifying group is more preferably a modifying group containing an atom selected from the group consisting of a nitrogen atom, an oxygen atom, a phosphorus atom, a sulfur atom and a silicon atom, and further preferably a modifying group containing an atom selected from the group consisting of, among these, a nitrogen atom, an oxygen atom and a

silicon atom.

As the nitrogen atom-containing modifying group, an amino group, a pyridyl group, an imino group, an amide group, a nitro group, a urethane-bonding group, or a hydrocarbon group containing at least one of these groups is quoted as an example. As the oxygen atom-containing modifying group, a hydroxyl group, a carboxylic acid group, an ether group, an ester group, a carbonyl group, an aldehyde group, an epoxy group, or a hydrocarbon group containing at least one of these groups is quoted as an example. As the silicon atom-containing modifying group, an alkylsilyl group, an oxysilyl group, or a hydrocarbon group containing at least one of these groups is quoted as an example. As the phosphorus atom-containing modifying group, a phosphate group, a phosphino group, or a hydrocarbon group containing at least one of these groups is quoted as an example. As the sulfur atom-containing modifying group, a sulfonyl group, a thiol group, a thioether group, or a hydrocarbon group containing at least one of these groups is quoted as an example. Further, as the modifying group, a modifying group containing a plurality of the above-described groups may also be adopted. Among these, from the viewpoint that the strength at break and the abrasion resistance in the case of forming a cross-linked rubber can be more improved, specific examples of the particularly preferable modifying group include an amino group, a pyridyl group, an imino group, an amide group, a hydroxyl group, a carboxylic acid group, an aldehyde group, an epoxy group, an oxysilyl group, or a hydrocarbon group containing at least one of these groups; from the viewpoint of the affinity to silica, an oxysilyl group is particularly preferable. Note that an oxysilyl group means a group having a silicon-oxygen bond.

Specific examples of the oxysilyl group include an alkoxysilyl group, an aryloxysilyl group, an acyloxy group, an alkylsiloxysilyl group, or an arylsiloxysilyl group. Further, specific examples of the oxysilyl group may also include a hydroxysilyl group obtained by hydrolyzing an alkoxysilyl group, an aryloxysilyl group or an acyloxy group. Among these, from the viewpoint of the affinity to silica, an alkoxysilyl group is preferable.

An alkoxysilyl group is a group formed by bonding one or more alkoxy groups to a silicon atom, and specific examples of such a group include a trimethoxysilyl group, a (dimethoxy)(methyl)silyl group, a (methoxy)(dimethyl)silyl group, a (methoxy)(dichloro)silyl group, a triethoxysilyl group, a (diethoxy)(methyl)silyl group, an (ethoxy)(dimethyl)silyl group, a (dimethoxy)(ethoxy)silyl group, a (methoxy)(diethoxy)silyl group, and a tripropoxysilyl group.

The introduction proportion of the modifying group at the polymer chain end of the cyclopentene ring-opening copolymer of the present invention is not particularly limited, but is preferably 10% or more, more preferably 20% or more, further preferably 30% or more, and particularly preferably 40% or more, in terms of the percentage value of the number of the chain ends having the modifying groups introduced of the cyclopentene ring-opening copolymer/the total number of the chain ends of the cyclopentene ring-opening copolymer. The higher the introduction proportion of the end modifying group, the higher the affinity to silica used as a filler in the preparation of a rubber material for tire from the cyclopentene ring-opening copolymer, and consequently, the improvement effect of the low heat buildup property is preferably enhanced. Note that the method for measuring the introduction proportion of the modifying group into the polymer chain end is not particularly limited; for example, in the case of the introduction of an oxysilyl group as an end modifying group, the introduction proportion can be determined from the peak area proportion corresponding to the oxysilyl group determined from the $^1$H-NMR spectrum measurement and the number average molecular weight determined from gel permeation chromatography.

The Mooney viscosity ($ML_{1+4}$, 100°C) of the cyclopentene ring-opening copolymer of the present invention is preferably 20 to 150, more preferably 22 to 120, and further preferably 25 to 90. By setting the Mooney viscosity so as to fall within the above-described range, the kneading is facilitated at room temperature and high temperatures, and consequently the processability can be made better.

<Method for Producing Cyclopentene Ring-Opening Copolymer>

The method for producing the cyclopentene ring-opening copolymer of the present invention is not particularly limited, but there may be quoted, for example, a method in which cyclopentene and a norbornene compound with three or more rings are copolymerized in the presence of a ring-opening polymerization catalyst.

The ring-opening polymerization catalyst is not particularly limited as long as the ring-opening polymerization catalyst can perform the ring-opening copolymerization between cyclopentene and a norbornene compound with three or more rings, but there may be quoted, for example, a tungsten compound, a molybdenum compound and a ruthenium-carbene complex.

Specific examples of the tungsten compound include: tungsten hexachloride, tungsten oxo tetrachloride, tungsten (phenylimide)tetrachloride, monocatecholate tungstentetra chloride, bis(3,5-ditertiary butyl)catecholate tungsten dichloride, bis(2-chloroethelate) tetrachloride, and tungsten oxotetraphenolate.

Specific examples of the molybdenum compound include molybdenum pentachloride, molybdenum oxo tetrachloride, and molybdenum (phenylimide)tetrachloride.

Specific examples of the ruthenium-carbene complex include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene)(tricyclohexylphosphine)benzylidene ruthenium dichloride, (1,3-dimesitylimidazolidin-2-ylidene)(tricyclohexylphosphine)benzylidene ruthenium dichloride, bis(tricyclohexylphosphine)ethoxymethylidene ruthenium dichloride, and (1,3-dimesitylimidazolidin-2-ylidene)(tricyclohexylphosphine)ethoxymethylidene ruthenium dichloride. The ring-opening polymerization catalysts may be used each alone or in combinations of two or more thereof.

The amount used of the ring-opening polymerization catalyst is, in terms of the molar ratio (ring-opening polymerization catalyst:monomers used for copolymerization), in a range usually from 1:500 to 1:2,000,000, preferably from 1:700 to 1:1,500,000, and more preferably from 1:1,000 to 1:1,000,000.

When a tungsten compound or a molybdenum compound is used as a ring-opening polymerization catalyst, an organometallic compound may also be used in combination with the catalyst as a catalytic promoter. Examples of the organometallic compound include organometallic compounds of the metals of Groups 1, 2, 12, 13 or 14 of the Periodic Table, having a hydrocarbon group having 1 to 20 carbon atoms. Among these, an organolithium compound, an organomagnesium compound, an organozinc compound, an organoaluminum compound and an organotin compound are preferably used; an organolithium compound, an organotin compound and an arganoaluminum compound are more preferably used; and an organoaluminum compound is particularly preferably used.

When a tungsten compound or a molybdenum compound is used as the ring-opening polymerization catalyst, the amount of the organometallic compound used as a catalytic promoter in combination with the foregoing catalyst is not particularly limited, but is, in terms of the molar ratio of (the molybdenum compound or tungsten compound:the organometallic compound used as a catalytic promoter), in a range usually from 1:0.1 to 1:100, preferably from 1:0.2 to 1:50, and more preferably 1:0.5 to 1:20. Note that the organometallic compounds as catalytic promoters in combination with catalyst may be used each alone or in combinations of two or more thereof.

The polymerization reaction may be performed either under solvent-free conditions or in solution. When a copolymerization is performed in a solution, the solvent to be used is not particularly limited as long as the solvent is inert in the polymerization reaction, and is a solvent capable of dissolving cyclopentene, a norbornene compound with three or more rings, the polymerization catalyst and the like to be used in the copolymerization, but it is preferable to use a hydrocarbon-based solvent or a halogen-based solvent. Examples of the hydrocarbon-based solvent include: aromatic hydrocarbons such as benzene, toluene, xylene and ethylbenzene; aliphatic hydrocarbons such as hexane, n-heptane and n-octane; alicyclic hydrocarbons such as cyclohexane, cyclopentane and methylcyclohexane. Examples of the halogen-based solvent include: alkyl halides such as dichloromethane and chloroform; and aromatic halides such as chlorobenzene and dichlorobenzene. These solvents may be used each alone or in combinations of two or more thereof.

When cyclopentene and a norbornene compound with three or more rings are ring-opening copolymerized, in order to adjust the molecular weight of the obtained cyclopentene ring-opening copolymer, an olefin compound or a diolefin compound may be added, if necessary, as a molecular weight adjuster to the polymerization reaction system.

The olefin compound is not particularly limited as long as the olefin compound is an organic compound having an ethylenically unsaturated bond; examples of such an olefin compound include: α-olefins such as 1-butene, 1-pemtene, 1-hexene and 1-octene; styrenes such as styrene and vinyltoluene; halogen-containing vinyl compounds such as allyl chloride; vinyl ethers such as ethyl vinyl ether and i-butyl vinyl ether; silicon-containing vinyl compounds such as allyltrimethoxysilane, allyltriethoxysilane, allyltrichlorosilane, and styryltrimethoxysilane; and disubstituted olefins such as 2-butene and 3-hexene.

Examples of the diolefin compound include nonconjugated diolefins such as 1,4-pentadiene, 1,4-hexadiene, 1,5-hexadiene, 1,6-heptadiene, 2-methyl-1,4-pentadiene and 2,5-dimethyl-1,5-hexadiene.

The amount used of the olefin compound and the diolefin compound as the molecular weight adjuster may be suitably selected according to the molecular weight of the cyclopentene ring-opening copolymer to be produced, but is, in relation to the monomers to be used in the copolymerization, in terms of the molar ratio, in a range usually from 1/100 to 1/100,000, preferably from 1/200 to 1/50,000, and more preferably from 1/500 to 1/10,000.

Further, when the cyclopentene ring-opening copolymer of the present invention is made to have a modifying group at a polymer chain end, it is preferable to use, as a molecular weight adjuster, a modifying group-containing olefinically unsaturated hydrocarbon compound, in place of the above-described olefin compound and diolefin compound. By using such a modifying group-containing olefinically unsaturated hydrocarbon compound, the modifying group can be suitably introduced at the polymer chain end of the cyclopentene ring-opening copolymer obtained by the copolymerization.

The modifying group-containing olefinically unsaturated hydrocarbon compound is not particularly limited as long as the modifying group-containing olefinically unsaturated hydrocarbon compound is a compound having the modifying group and having one olefinic carbon-carbon double bond having the metathesis reactivity. For example, when an oxysilyl group is desired to be introduced at the polymer chain end of the cyclopentene ring-opening copolymer, an oxysilyl group-containing olefinically unsaturated hydrocarbon may be allowed to be present in the polymerization reaction

system.

Examples of such an oxysilyl group-containing olefinically unsaturated hydrocarbon, to introduce the modifying group only at one end (single end) of the polymer chain of the cyclopentene ring-opening copolymer, include: alkoxysilane compounds such as vinyl(trimethoxy)silane, vinyl(triethoxy)silane, allyl(trimethoxy)silane, allyl(methoxy)(dimethyl)silane, allyl(triethoxy)silane, allyl(ethoxy)(dimethyl)silane, styryl(trimethoxy)silane, styryl(triethoxy)silane, styrylethyl(triethoxy)silane, allyl(triethoxysilylmethyl)ether, and allyl(triethoxysilylmethyl)(ethyl)amine; aryloxysilane compounds such as vinyl(triphenoxy)silane, allyl(triphenoxy)silane, and allyl(phenoxy)(dimethyl)silane; acyloxysilane compounds such as vinyl(triacetoxy)silane, allyl(triacetoxy)silane, allyl(diacetoxy)methylsilane, and allyl(acetoxy)(dimethyl)silane; alkylsiloxysilane compounds such as allyl tris(trimethylsiloxy)silane; arylsiloxysilane compounds such as allyl tris(triphenylsiloxy)silane; and polysiloxane compounds such as 1-allyl heptamethyltrisiloxane, 1-allyl nonamethyltetrasiloxane, 1-allyl nonamethyl cyclopentasiloxane, and 1-allyl undecamethyl cyclohexasiloxane.

Further, examples of such an oxysilyl group-containing olefinically unsaturated hydrocarbon, to introduce the modifying groups at both ends (double ends) of the polymer chain of the cyclopentene ring-opening copolymer, include: alkoxysilane compounds such as bis(trimethoxysilyl)ethylene, bis(triethoxysilyl)ethylene, 2-butene-1,4-di(trimethoxysilane), 2-butene-1,4-di(triethoxysilane), and 1,4-di(trimethoxysilylmethoxy)-2-butene; aryloxysilane compounds such as 2-butene-1,4-di(triphenoxysilane); acyloxysilane compounds such as 2-butene-1,4-di(triacetoxysilane); alkylsiloxysilane compounds such as 2-butene-1,4-di[tris(trimethylsiloxy)silane]; arylsiloxysilane compounds such as 2-butene-1,4-di[tris(triphenylsiloxy)silane]; and polysiloxane compounds such as 2-butene-1,4-di(heptamethyltrisiloxane), and 2-butene-1,4-di(undecamethylcyclohexasiloxane).

The modifying group-containing olefinically unsaturated hydrocarbon compound such as the oxysilyl group-containing olefinically unsaturated hydrocarbon compound also acts as a molecular weight adjuster in addition to the action of introducing a modifying group to the polymer end(s) of the cyclopentene ring-opening copolymer, and accordingly the amount used of the modifying group-containing olefinically unsaturated hydrocarbon compound may be suitably selected according to the molecular weight of the cyclopentene ring-opening copolymer to be produced; the amount used of the modifying group-containing olefinically unsaturated hydrocarbon compound is, in relation to the monomers to be used for the copolymerization, in terms of the molar ratio, in a range usually from 1/100 to 1/100,000, preferably from 1/200 to 1/50,000, and more preferably from 1/500 to 1/10,000.

The polymerization reaction temperature is not particularly limited, but is preferably -100°C or higher, more preferably -50°C or higher, further preferably 0°C or higher, and particularly preferably 20°C or higher. Further, the upper limit of the polymerization reaction temperature is not particularly limited, but is preferably lower than 100°C, more preferably lower than 90°C, further preferably lower than 80°C, and particularly preferably lower than 70°C. The polymerization reaction time is also not particularly limited, but is preferably 1 minute to 72 hours, and more preferably 10 minutes to 20 hours.

The cyclopentene ring-opening copolymer obtained by the polymerization reaction may, if desired, have an antioxidant such as a phenol-based stabilizer, a phosphorus-based stabilizer, or a sulfur-based stabilizer added to it. The amount of addition of the antioxidant may be suitably determined in accordance with the type etc. Moreover, the obtained cyclopentene ring-opening copolymer may, if desired, have an extender oil mixed therein. In the case where the cyclopentene ring-opening copolymer is obtained as polymerization solution, in order to collect the cyclopentene ring-opening copolymer from the polymerization solution, a known collection method may be adopted; there can be adopted, for example, a method in which after the solvent is separated by steam stripping or the like, the solid product is filtered off, the filtered-off solid product is further dried, and thus a cyclopentene ring-opening copolymer in a solid state is obtained.

<Rubber Composition>

The rubber composition of the present invention comprises the above-described cyclopentene ring-opening copolymer of the present invention and silica mixed therewith.

Examples of silica include, without being particularly limited to: dry type white carbon, wet type white carbon, colloidal silica, and precipitated silica. Further, a carbon-silica dual phase filler comprised of carbon black on the surface of which silica is carried may also be used. Preferable among these is the wet type white carbon mainly composed of hydrous silicic acid. These can be used each alone or in combinations of two or more thereof.

The nitrogen adsorption specific surface area of the silica is preferably 50 to 300 $m^2/g$, more preferably 80 to 220 $m^2/g$, and particularly preferably 100 to 170 $m^2/g$. When the specific surface area falls in this range, the affinity between the cyclopentene ring-opening copolymer and the silica becomes particularly good. Further, the pH of the silica is preferably less than pH7, and more preferably pH5 to 6.9. Note that the nitrogen adsorption specific surface area can be measured in accordance with ASTM D3037-81, by the BET method.

The amount of the silica in the rubber composition of the present invention is, in relation to 100 parts by weight of the rubber component including the above-described cyclopentene ring-opening copolymer of the present invention

in the rubber composition, preferably 1 to 150 parts by weight, more preferably 10 to 120 parts by weight, further preferably 15 to 100 parts by weight, and particularly preferably 20 to 80 parts by weight. By setting the amount of the silica within the above-described range, the strength at break and the abrasion resistance of the obtained cross-linked rubber can be more appropriately enhanced.

In the rubber composition of the present invention, a silane coupling agent is preferably further mixed, for the purpose of more improving the affinity between the cyclopentene ring-opening copolymer and the silica. Examples of the silane coupling agent include: vinyltriethoxysilane, β-(3,4-epoxycyclohexyl)ethyltrimethoxysilane, N-(β-aminoethyl)-γ-aminopropyltrimethoxysilane, bis(3-(triethoxysilyl)propyl)tetrasulfide, and bis(3-(triethoxysilyl)propyl)disulfide; and tetrasulfides described in Japanese Patent Laid-Open No. 6-248116, such as γ-trimethoxysilylpropyldimethylthiocarbamyl tetrasulfide, and γ-trimethoxysilylpropylbenzothiazyl tetrasulfide. Among these, the tetrasulfides are preferable. These silane coupling agents can be used each alone or in combinations of two or more thereof. The amount of the silane coupling agent is, in relation to 100 parts by weight of the silica, preferably 0.1 to 30 parts by weight and more preferably 1 to 15 parts by weight.

Further, the rubber composition of the present invention may further include as a rubber component rubber other than the above-described cyclopentene ring-opening copolymer of the present invention. Examples of the rubber other than the cyclopentene ring-opening copolymer of the present invention include: natural rubber (NR), polyisoprene rubber (IR), emulsion polymerized SBR (styrene-butadiene copolymer rubber), solution polymerized random SBR (bound styrene: 5 to 50 wt%, 1,2-bond content in butadiene moiety: 10 to 80%), high trans SBR (trans bond content in butadiene moiety: 70 to 95%), low cis BR (polybutadiene rubber), high cis BR, high trans BR (trans bond content in butadiene moiety: 70 to 95%), styrene-isoprene copolymer rubber, butadiene-isoprene copolymer rubber, emulsion polymerized styrene-acrylonitrile-butadiene copolymer rubber, acrylonitrile-butadiene copolymer rubber, high vinyl SBR-low vinyl SBR block copolymer rubber, polyisoprene-SBR block copolymer rubber, polystyrene-polybutadiene-polystyrene block copolymer, acrylic rubber, epichlorohydrin rubber, fluororubber, silicone rubber, ethylene-propylene rubber, and urethane rubber. Among these, NR, BR, IR, and SBR are preferably used. These rubbers can be used each alone or in combinations of two or more thereof.

The content of the cyclopentene ring-opening copolymer in the rubber composition of the present invention is set, in relation to the total amount of the rubber components, to be preferably 50 wt% or more, more preferably 60 wt% or more, and particularly preferably 70 wt% or more. When this content is too low, the improvement effect of the strength at break and the abrasion resistance is liable not to be obtained.

The rubber composition of the present invention may contain, in addition to the above-described components, compounding agents such as a cross-linking agent, a cross-linking accelerator, a cross-linking activator, fillers other than silica, an antioxidant, an activator, a process oil, a plasticizer and a lubricant, in necessary amounts by an ordinary method.

Examples of the cross-linking agent include: sulfurs such as powdered sulfur, precipitated sulfur, colloidal sulfur, insoluble sulfur, and high dispersion sulfur; halogenated sulfurs such as sulfur monochloride and sulfur dichloride; organic peroxides such as dicumyl peroxide and ditertiary butyl peroxide; quinonedioximes such as p-quinonedioxime, and p,p'-dibenzoylquinonedioxime; organic polyamine compounds such as triethylenetetramine, hexamethylenediamine carbamate, and 4,4'-methylenebis-o-chloroaniline; and alkylphenol resin with a methylol group. Among these, sulfur is preferable, and powdered sulfur is more preferable. These cross-linking agents are used each alone or in combinations of two or more thereof. The amount of the cross-linking agent is, in relation to 100 parts by weight of the rubber components in the rubber composition, preferably 0.1 to 15 parts by weight and more preferably 0.5 to 5 parts by weight.

Examples of the cross-linking accelerator include: sulfenamide-based cross-linking accelerators such as N-cyclohexyl-2-benzothiazolylsulfenamide, N-t-butyl-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-diorthotolylguanidine, and 1-orthotolylbiguanidine; thiourea-based cross-linking accelerators such as diethylthiourea; thiazole-based cross-linking accelerators such as 2-mercaptobenzothiazole, dibenzothiazyl disulfide, and 2-mercaptobenzothiazole zinc salt; thiuram-based cross-linking accelerators such as tetramethylthiuram monosulfide, and tetramethylthiuram disulfide; dithiocarbamic acid-based cross-linking accelerators such as sodium dimethyldithiocarbamate and zinc diethyldithiocarbamate; and xanthogenic acid-based cross-linking accelerators such as sodium isopropylxanthogenate, zinc isopropylxanthogenate, and zinc butylxanthogenate. Among these, the cross-linking accelerators including sulfenamide-based cross-linking accelerators are particularly preferable. These cross-linking accelerators are used each alone or in combinations of two or more thereof. The amount of the cross-linking accelerator is, in relation to 100 parts by weight of the rubber components in the rubber composition, preferably 0.1 to 15 parts by weight, and more preferably 0.5 to 5 parts by weight.

As the cross-linking activator, for example, a higher fatty acid such as stearic acid or zinc oxide can be used. The amount of the cross-linking activator is suitably selected; the amount of the higher fatty acid is, in relation to 100 parts by weight of the rubber components in the rubber composition, preferably 0.05 to 15 parts by weight and more preferably 0.5 to 5 parts by weight; the amount of zinc oxide is, in relation to 100 parts by weight of the rubber components

in the rubber composition, preferably 0.05 to 10 parts by weight and more preferably 0.5 to 3 parts by weight.

As the process oil, a mineral oil or a synthetic oil may be used. As the mineral oil, aroma oil, naphthene oil or paraffin oil is usually used. Examples of the other compounding agents include: activators such as diethylene glycol, polyethylene glycol, and silicone oil; fillers other than silica such as carbon black, calcium carbonate, talc, and clay; tackifiers such as a petroleum resin and coumarone resin; and waxes.

The rubber composition of the present invention can be obtained by kneading the individual components by an ordinary method. For example, the rubber composition can be obtained by kneading the compounding agents other than the cross-linking agent and cross-linking accelerator with the rubber components such as the cyclopentene ring-opening copolymer, and then by mixing the cross-linking agent and cross-linking accelerator with the kneaded product. The kneading temperature of the compounding agents other than the cross-linking agent and the cross-linking accelerator with the rubber components such as the cyclopentene ring-opening copolymer is preferably 80 to 200°C, and more preferably 120 to 180°C, and the kneading time involved is preferably 30 seconds to 30 minutes. The mixing of the cross-linking agent and the cross-linking accelerator is performed after cooling to usually 100°C or lower and preferably to 80°C or lower.

<Cross-Linked Rubber>

The cross-linked rubber of the present invention is obtained by cross-linking the above-described rubber composition of the present invention.

The cross-linked rubber of the present invention can be produced by using the rubber composition of the present invention, for example, by molding with a molding machine corresponding to the desired shape such as an extruding machine, an injection molding machine, a compressor and a roll, by performing a cross-linking reaction by heating, and by fixing the shape as a cross-linked product. In this case, the cross-linking may be performed after a molding performed beforehand, or simultaneously with the molding. The molding temperature is usually 10 to 200°C, and preferably 25 to 120°C. The cross-linking temperature is usually 100 to 200°C, preferably 130 to 190°C; the cross-linking time is usually 1 minute to 24 hours, preferably 2 minutes to 12 hours and particularly preferably 3 minutes to 6 hours.

Further, depending on the shape and the size of the cross-linked rubber, even when the surface of the cross-linked rubber is cross-linked, the interior of the cross-linked rubber is sometimes not sufficiently cross-linked; in such a case, a secondary cross-linking may be further performed by heating.

As the heating method, there may be suitably selected a common method used for cross-linking of rubber such as press heating, steam heating, oven heating and hot air heating.

The cross-linked rubber of the present invention obtained in this way is obtained by using the above-described cyclopentene ring-opening copolymer of the present invention; as described above, the cyclopentene ring-opening copolymer of the present invention is effectively enhanced in the strength at break and the abrasion resistance, in addition to the improvement effect of the wet grip property and the low heat buildup property, obtained by copolymerizing a norbornene compound with cyclopentene; accordingly, the cross-linked rubber of the present invention is also excellent in strength at break and abrasion resistance, in addition to being excellent in wet grip property and low heat buildup property. Additionally, by taking advantage of such properties, the cross-linked rubber of the present invention can be used, for example, in the following various applications: materials for individual tire members in tires such as cap treads, base treads, carcasses, side walls, and beads; materials for various industrial products such as hoses, belts, mats, antivibration rubber and others; impact resistance improvers for resins; resin film buffers; shoe soles; rubber shoes; golf balls; and toys. In particular, the cross-linked rubber of the present invention can be suitably used in individual tire members such as treads, carcasses, side walls and beads in various tires such as all-season tires, high-performance tires, and studless tires.

EXAMPLES

Hereinafter, the present invention will be described on the basis of further detailed examples, but the present invention is not limited to these examples. Note that hereinafter, "parts" are based on weight unless otherwise indicated. Further, the tests and evaluations were conducted as follows.

[Molecular Weight of Cyclopentene Ring-Opening Copolymer]

The weight average molecular weight (Mw), the number average molecular weight (Mn), and the molecular weight distribution (Mw/Mn) were determined on the basis of the charts based on the molecular weights determined by gel permeation chromatography (GPC) relative to polystyrene standards. Note that the specific measurement conditions of gel permeation chromatography are as follows.

Measurement apparatus: HLC-8320 EcoSCE (manufactured by Tosoh Corporation)
Column: Two GMH-HR-H (manufactured by Tosoh Corporation) columns were connected in series.
Detector: Differential refractometer RI-8020 (manufactured by Tosoh Corporation)
Eluent: Tetrahydrofuran
Column temperature: 40°C

[Proportions of Structural Unit Derived from Cyclopentene and Structural Unit Derived from Norbornene Compound in Cyclopentene Ring-Opening Copolymer]

The monomer composition ratio in the cyclopentene ring-opening copolymer was determined from the $^{1}$H-NMR spectral measurement.

[Content of Aromatic Rings in Cyclopentene Ring-Opening Copolymer]

The proportion of the aromatic rings in the cyclopentene ring-opening copolymer, in relation to the whole of the polymer was determined from the $^{1}$H-NMR spectral measurement.

[Introduction Rate of Oxysilyl Group in Cyclopentene Ring-Opening Copolymer]

From the $^{1}$H-NMR spectral measurement, the ratio between the peak integral value around 3.8 ppm originating from the oxysilyl group and the peak integral value from 5.0 to 6.0 ppm originating from the carbon-carbon double bonds in the main chain of the cyclopentene ring-opening copolymer was determined; on the basis of the determined peak integral value ratio and the number average molecular weight (Mn) value measured by GPC, the introduction rate of the oxysilyl group [(number of chain ends having oxysilyl group introduced therein of cyclopentene ring-opening copolymer/total number of chain ends of cyclopentene ring-opening polymer] was calculated.

[Content of Styrene Monomer Unit and Vinyl Bonding Amount in Styrene-Butadiene Rubber]

The content of the styrene monomer unit and the vinyl bonding amount were measured by $^{1}$H-NMR.

[Mooney Viscosities ($ML_{1+4}$, 100°C) of Cyclopentene Ring-Opening Copolymer and Styrene-Butadiene Rubber]

The Mooney viscosities ($ML_{1+4}$, 100°C) of the cyclopentene ring-opening copolymer and the styrene-butadiene Rubber were measured in accordance with JIS K6300.

[Glass Transition Temperatures (Tg) of Cyclopentene Ring-Opening Copolymer and Styrene-Butadiene Rubber]

The glass transition temperatures (Tg) of the cyclopentene ring-opening copolymer and the styrene-butadiene rubber were measured by using a differential scanning calorimeter (DSC) at a temperature increase rate of 10°C/min.

[Strength at Break]

A rubber composition to be a sample was cross-linked by pressing at 160°C for 20 minutes to prepare a cross-linked test piece. The strength at break of the prepared test piece was measured by using a tensile tester (trade name: "Tensometer 10K" manufactured by Alpha Technologies Ltd.) in accordance with JIS K6251:2010 "Rubber, vulcanized or thermoplastics-Determination of tensile stress-strain properties." This value was given as an index relative to the measurement value of the sample of Comparative Example 1, defined to be 100. The larger index indicates the higher strength at break.

[Evaluation of Abrasion Resistance]

The rubber composition to be a sample was cross-linked by pressing at 160°C for 20 minutes to prepare a cross-linked test piece. The abrasion loss of the prepared test piece was measured by using a Lambourn abrasion tester, in accordance with JIS K6264. This value was given as an index relative to the measurement value of the sample of Comparative Example 1, defined to be 100. The larger index indicates the more excellent abrasion resistance. Note that the evaluation of the abrasion resistance was performed only for Examples 1 to 4 and Comparative Examples 1 and 2.

(Example 1; not being an embodiment of the present invention as claimed)

(Production of Cyclopentene Ring-Opening Copolymer)

In a nitrogen atmosphere, in a pressure resistant glass reaction vessel equipped with a stirrer, 541 parts of cyclopentene, 163 parts of 1,4-methano-1,4,4a,9a-tetrahydro-9H-fluorene (MTHF), 2800 parts of toluene and 0.61 part of 1-hexene were added; to the resulting mixture, a polymerization catalyst solution prepared by dissolving 0.074 part of (1,3-dimesitylimidazolidin-2-ylidene)(tricyclohexylphosphine)benzylidene ruthenium dichloride in 30 parts of toluene was added; and a polymerization reaction was performed at 25°C for 4 hours. After the polymerization reaction for 4 hours, an excessive amount of isopropanol was added to the pressure resistant glass reaction vessel to terminate the polymerization, and then the solution in the pressure resistant glass reaction vessel was poured into a largely excessive amount of isopropanol containing 2,6-di-t-butyl-p-cresol (BHT). Next, the precipitated polymer was collected, washed with isopropanol, and vacuum dried at 40°C for 3 days to obtain 320 parts of cyclopentene/MTHF ring-opening copolymer. For the obtained cyclopentene/MTHF ring-opening copolymer, according to the above-described methods, the molecular weight, the monomer composition ratio, the content of aromatic rings, the Mooney viscosity ($ML_{1+4}$, 100°C), and the glass transition temperature (Tg) were measured. The results thus obtained are shown in Table 1.

(Preparation of Rubber Composition)

By using a 250-ml volume Banbury mixer, 100 parts of the cyclopentene/MTHF ring-opening copolymer obtained as described above was masticated, then 40 parts of silica (trade name "Zeosil 1165MP," manufactured by Solvay Inc., nitrogen adsorption specific surface area (BET method): 163 $m^2/g$), 10 parts of a process oil (trade name "Aromax T-DAE," manufactured by Nippon Oil Corporation), and 4.8 parts of a silane coupling agent (bis(3-(triethoxysilyl)propyl)tetrasulfide, trade name "Si69," manufactured by Degussa AG) were added to the masticated copolymer, and the resulting mixture was kneaded for 1.5 minutes with a kneading starting temperature set at 110°C. Next, to the resulting kneaded product, 20 parts of silica (trade name "Zeosil 1165MP," manufactured by Solvay Inc.), 3 parts of zinc oxide (Zinc White No. 1), 2 parts of stearic acid (trade name "SA-300," manufactured by Asahi Denka Kogyo Co., Ltd.), and 2 parts of an antioxidant (N-phenyl-N'-(1,3-dimethylbutyl)-p-phenylenediamine, trade name "Nocrac 6C," manufactured by Ouchi Shinko Chemical Industrial Co., Ltd.) were added, the resulting mixture was kneaded for 3 minutes, and then the kneaded product was discharged from the Banbury mixer. The temperature of the rubber composition at the completion of the kneading was 150°C. Then, the resulting kneaded product was cooled to room temperature, and then again kneaded in the Banbury mixer for 3 minutes, and subsequently the kneaded product was discharged from the Banbury mixer. Next, by using an open roll set at 50°C, the resulting kneaded product, 1.6 parts of sulfur, and 2.8 parts of a cross-linking accelerator (a mixture composed of 1.4 parts of cyclohexyl-2-benzothiazolylsulfenamide (trade name "Nocceler CZ-G," manufactured by Ouchi Shinko Chemical Industrial Co., Ltd.) and 1.4 parts of 1,3-diphenylguanidine (trade name "Nocceler D," manufactured by Ouchi Shinko Chemical Industrial Co., Ltd.)) were kneaded, and then a sheet-shaped rubber composition was taken out. Then, for the obtained rubber composition, the strength at break and the abrasion resistance were evaluated by the above-described methods. The results thus obtained are shown in Table 1.

(Example 2; not being an embodiment of the present invention as claimed)

A polymerization reaction was performed in the same manner as in Example 1 except that the amount used of cyclopentene was altered to 193 parts, the amount used of 1,4-methano-1,4,4a,9a-tetrahydro-9H-fluorene(MTHF) was altered to 85 parts, the amount used of toluene was altered to 1100 parts, the amount used of (1,3-dimesitylimidazolidin-2-ylidene)(tricyclohexylphosphine)benzylidene ruthenium dichloride was altered to 0.028 part, and 0.47 part of allyltriethoxysilane was used in place of 0.61 part of 1-hexene; thus, there was obtained 178 parts of an end modified cyclopentene/MTHF ring-opening copolymer having a triethoxysilyl group at one end of the polymer chain. For the obtained end modified cyclopentene/MTHF ring-opening copolymer, the foregoing measurements were performed in the same manner as in Example 1. The results thus obtained are shown in Table 1. In the end modified cyclopentene/MTHF ring-opening copolymer, the introduction rate of the oxysilyl group was 45%.

Then, a sheet-shaped rubber composition was prepared in the same manner as in Example 1 except that 100 parts of the obtained end modified cyclopentene/MTHF ring-opening copolymer was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Example 3; not being an embodiment of the present invention as claimed)

A polymerization reaction was performed in the same manner as in Example 1 except that the amount used

of cyclopentene was altered to 166 parts, the amount used of toluene was altered to 1057 parts, the amount used of (1,3-dimesitylimidazolidin-2-ylidene)(tricyclohexylphosphine)benzylidene ruthenium dichloride was altered to 0.028 part, the amount used of 1-hexene was altered to 0.42 part, and 162 parts of a 70 wt% dicyclopentadiene (DCPD)/cyclohexane solution was used in place of 163 parts of 1,4-methano-1,4,4a,9a-tetrahydro-9H-fluorene (MTHF); and thus, there was obtained 177 parts of a cyclopentene/DCPD ring-opening copolymer was obtained. For the obtained cyclopentene/DCPD ring-opening copolymer, the foregoing measurements were performed in the same manner as in Example 1. The results thus obtained are shown in Table 1.

Then, a sheet-shaped rubber composition was prepared in the same manner as in Example 1 except that 100 parts of the obtained cyclopentene/DCPD ring-opening copolymer was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Example 4)

A polymerization reaction was performed in the same manner as in Example 1 except that the amount used of cyclopentene was altered to 183 parts, the amount used of toluene was altered to 1100 parts, the amount used of (1,3-dimesitylimidazolidin-2-ylidene)(tricyclohexylphosphine)benzylidene ruthenium dichloride was altered to 0.028 part, and the amount used of 1-hexene was altered to 0.28 part, and 100 parts of tetracyclo[6.2.1.1$^{3,6}$.0$^{2,7}$]dodec-4-ene (TCD) was used in place of 163 parts of 1,4-methano-1,4,4a,9a-tetrahydro-9H-fluorene (MTHF); and thus, there was obtained 191 parts of cyclopentene/TCD ring-opening copolymer. For the obtained cyclopentene/TCD ring-opening copolymer, the foregoing measurements were performed in the same manner as in Example 1. The results thus obtained are shown in Table 1.

Then, a sheet-shaped rubber composition was prepared in the same manner as in Example 1 except that 100 parts of the obtained cyclopentene/TCD ring-opening copolymer was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Comparative Example 1)

(Production of Amino Group-Modified Styrene-Butadiene Rubber)

In an autoclave equipped with a stirrer, in a nitrogen atmosphere, 5670 g of cyclohexane, 170 g of styrene, 430 g of 1,3-butadiene, and 8.4 mmol of tetramethyl ethylene diamine were placed, and then n-butyl lithium was added in an amount required for neutralizing the polymerization-disturbing impurities contained in cyclohexane, styrene and 1,3-butadiuene. Subsequently, n-butyl lithium was added in an amount of 6.0 mmol as the amount to be used for the polymerization reaction, and then the polymerization was started at 40°C. Next, at an elapsed time of 10 minutes from the start of the polymerization, 40 g of styrene and 360 g of 1,3-butadiene were continuously added over 60 minutes. Note that the highest temperature during the polymerization reaction was 70°C. Then, after the completion of the continuous addition, the polymerization reaction was continued further for 10 minutes; after verifying that the polymerization conversion rate reached to a range from 95% to 100%, 0.6 mmol of tin tetrachloride as a coupling agent was added in a state of a 20 wt% cyclohexane solution, and was allowed to react at 65°C for 10 minutes. Next, as a modifying agent, 5.4 mmol of N-phenyl-2-pyrrolidone was added in a state of a 40 wt% xylene solution, and was allowed to react at 65°C for 20 minutes. Subsequently, as a polymerization terminator, methanol was added in an amount corresponding to the twice the number of moles of the n-butyl lithium used for the polymerization reaction, and thus, there was obtained a solution containing an amino group-modified styrene-butadiene rubber.

Then, 2,4-bis(n-octylthiomethyl)-6-methylphenol was added as an antioxidant in a ratio of 0.2 part per 100 parts of the rubber component of the obtained solution containing an amino group-modified styrene-butadiene rubber. Next, the solvent was removed by steam stripping, the solid rubber was collected, the collected rubber was hung on a roll for dehydration and further dried by using a hot air dryer, and thus, an amino group-modified styrene-butadiene rubber was obtained.

In the obtained amino group-modified styrene-butadiene rubber, the bound styrene content was 21 wt%, and the vinyl bond content in the butadiene unit portion was 63 wt%. The foregoing measurements were performed in the same manner as in Example 1. The results thus obtained are shown in Table 1.

(Preparation of Rubber Composition)

Then, a sheet-shaped rubber composition was prepared in the same manner as in Example 1 except that 100 parts of the obtained amino group-modified styrene-butadiene rubber was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Comparative Example 2)

(Production of Siloxane-Modified Styrene-Butadiene Rubber)

In an autoclave equipped with a stirrer, in a nitrogen atmosphere, 5670 g of cyclohexane, 170 g of styrene, 430 g of 1,3-butadiene, and 10.0 mmol of tetramethyl ethylene diamine were placed, and then n-butyl lithium was added in an amount required for neutralizing the polymerization-disturbing impurities contained in cyclohexane, styrene and 1,3-butadiuene. Subsequently, n-butyl lithium was added in an amount of 5.6 mmol as the amount to be used for the polymerization reaction, and then the polymerization was started at 40°C Next, at an elapsed time of 10 minutes from the start of the polymerization, 40 g of styrene and 360 g of 1,3-butadiene were continuously added over 60 minutes. Note that the highest temperature during the polymerization reaction was 70°C. After the completion of the continuous addition, the polymerization reaction was continued further for 10 minutes; after verifying that the polymerization conversion rate reached to a range from 95% to 100%, 0.278 mmol of tin tetrachloride as a coupling agent was added in a state of a 20 wt% cyclohexane solution, and was allowed to react at 65°C for 10 minutes. Next, as a modifying agent, 0.024 mmol of the polyorganosiloxane represented by the following formula (3) was added in a state of a 40 wt% xylene solution, and was allowed to react at 65°C for 20 minutes. Subsequently, as a polymerization terminator, methanol was added in an amount corresponding to the twice the number of moles of the n-butyl lithium used for the polymerization reaction, and thus, there was obtained a solution containing a siloxane-modified styrene-butadiene rubber.

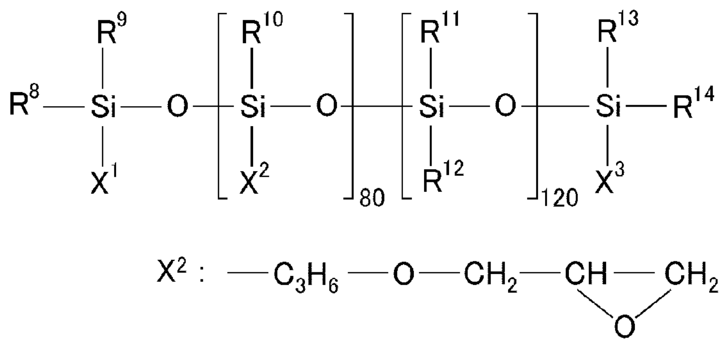

(3)

$X^1$, $X^3$, $R^8$~$R^{14}$: $-CH_3$

Then, 2,4-bis(n-octylthiomethyl)-6-methylphenol was added as an antioxidant in a ratio of 0.2 part per 100 parts of the rubber component of the obtained solution containing a siloxane-modified styrene-butadiene rubber. Next, the solvent was removed by steam stripping, the solid rubber was collected, the collected rubber was hung on a roll for dehydration and further dried by using a hot air dryer, and thus, a siloxane-modified styrene-butadiene rubber was obtained.

In the obtained siloxane-modified styrene-butadiene rubber, the bound styrene content was 21 wt%, and the vinyl bond content in the butadiene unit portion was 63 wt%. The foregoing measurements were performed in the same manner as in Example 1. The results thus obtained are shown in Table 1.

(Preparation of Rubber Composition)

Then, a sheet-shaped rubber composition was prepared in the same manner as in Example 1 except that 100 parts of the obtained siloxane-modified styrene-butadiene rubber was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Comparative Example 3)

A polymerization reaction was performed in the same manner as in Example 1 except that the amount used of cyclopentene was altered to 206 parts, the amount used of 1,4-methano-1,4,4a,9a-tetrahydro-9H-fluorene(MTHF) was altered to 49 parts, the amount used of toluene was altered to 1178 parts, the amount used of (1,3-dimesitylimidazolidin-2-ylidene)(tricyclohexylphosphine)benzylidene ruthenium dichloride was altered to 0.028 part, and the amount

used of 1-hexene was altered to 0.28 part; and thus, there was obtained 131 parts of cyclopentene/MTHF ring-opening copolymer. For the obtained cyclopentene/MTHF ring-opening copolymer, the foregoing measurements were performed in the same manner as in Example 1. The results thus obtained are shown in Table 1.

Then, a sheet-shaped rubber composition was prepared in the same manner as in Example 1 except that 100 parts of the obtained cyclopentene/MTHF ring-opening copolymer was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Comparative Example 4)

A polymerization reaction was performed in the same manner as in Example 1 except that the amount used of cyclopentene was altered to 188 parts, the amount used of toluene was altered to 1160 parts, the amount used of (1,3-dimesitylimidazolidin-2-ylidene)(tricyclohexylphosphine)benzylidene ruthenium dichloride was altered to 0.028 part, and the amount used of 1-hexene was altered to 0.17 part, and 103 parts of a 70 wt% dicyclopentadiene (DCPD)/cyclohexane solution was used in place of 163 parts of 1,4-methano-1,4,4a,9a-tetrahydro-9H-fluorene (MTHF); and thus, there was obtained 177 parts of cyclopentene/DCPD ring-opening copolymer. For the obtained cyclopentene/DCPD ring-opening copolymer, the foregoing measurements were performed in the same manner as in Example 1. The results thus obtained are shown in Table 1.

Then, a sheet-shaped rubber composition was prepared in the same manner as in Example 1 except that 100 parts of the obtained cyclopentene/DCPD ring-opening copolymer was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

(Comparative Example 5)

A polymerization reaction was performed in the same manner as in Example 1 except that the amount used of cyclopentene was altered to 211 parts, the amount used of toluene was altered to 1120 parts, the amount used of (1,3-dimesitylimidazolidin-2-ylidene)(tricyclohexylphosphine)benzylidene ruthenium dichloride was altered to 0.028 part, and the amount used of 1-hexene was altered to 0.25 part, and 32 parts of tetracyclo[6.2.1.1$^{3,6}$.0$^{2,7}$]dodec-4-ene (TCD) was used in place of 163 parts of 1,4-methano-1,4,4a,9a-tetrahydro-9H-fluorene (MTHF); and thus, there was obtained 191 parts of cyclopentene/TCD ring-opening copolymer. For the obtained cyclopentene/TCD ring-opening copolymer, the foregoing measurements were performed in the same manner as in Example 1. The results thus obtained are shown in Table 1.

Then, a sheet-shaped rubber composition was prepared in the same manner as in Example 1 except that 100 parts of the obtained cyclopentene/TCD ring-opening copolymer was used in place of 100 parts of the cyclopentene/MTHF ring-opening copolymer obtained in Example 1, and the obtained sheet-shaped rubber composition was evaluated in the same manner as in Example 1. The results thus obtained are shown in Table 1.

[Table 1]

Table 1

| | Type of polymer | Measurement results of polymer | | | | | | Evaluations of cross-linked rubber | |
|---|---|---|---|---|---|---|---|---|---|
| | | Weight average molecular weight (Mw) | Molecular weight distribution (Mw/Mn) | Proportion of structural unit derived from norbomene compound with three or more rings (wt%) | Content of aromatic rings (wt%) | Tg (°C) | Mooney viscosity | Strength at break (index) | Abrasion resistance (index) |
| Example 1 | Cyclopentene/MTHF ring-opening copolymer | 201,000 | 2.09 | 49 | 20 | -20 | 39.9 | 159 | 113 |
| Example 2 | End-modified cydopentene/MTHF ring-opening copolymer | 217,000 | 2.2 | 42 | 18 | -38.8 | 62.9 | 174 | 117 |
| Example 3 | Cyclopentene/DCPD ring-opening copolymer | 129,000 | 2.22 | 48 | 0 | -11.7 | 55.3 | 130 | 106 |
| Example 4 | Cyclopentene/TCD ring-opening copolymer | 94,000 | 1.71 | 53 | 0 | -28.3 | 52.8 | 146 | 109 |
| Comparative Example 1 | Amino group-modified styrene-butadiene rubber | 400,000 | 1.43 | 0 | 25 | -25 | 45 | 100 | 100 |
| Comparative Example 2 | Siloxane-modified styrene-butadiene rubber | 480,000 | 1.41 | 0 | 25 | -25 | 62 | 109 | 105 |
| Comparative Example 3 | Cyclopentene/MTHF ring-opening copolymer | 181,000 | 2.14 | 29 | 12 | -61 | 34.8 | 120 | - |
| Comparative Example 4 | Cyclopentene/DCPD ring-opening copolymer | 248,000 | 2.16 | 36 | 0 | -45 | 47.1 | 112 | - |

(continued)

| | Type of polymer | Measurement results of polymer | | | | | | Evaluations of cross-linked rubber | |
|---|---|---|---|---|---|---|---|---|---|
| | | Weightaverage molecular weight (Mw) | Molecular weight distribution (Mw/Mn) | Proportion of structural unit derived from norbomene compound with three or more rings (wt%) | Content of aromatic rings (wt%) | Tg (°C) | Mooney viscosity | Strength at break (index) | Abrasion resistance (index) |
| Comparative Example 5 | Cyclopentene/TCD ring-opening copolymer | 102,000 | 1.77 | 24 | 0 | -72 | 41.9 | 118 | - |

From the results shown in Table 1, the cyclopentene ring-opening copolymers each obtained by ring-opening copolymerizing cyclopentene and a norbornene compound with three or more rings and having a content of the structural unit derived from the norbornene compound with three or more rings of 40 to 80 wt% gave cross-linked rubbers excellent both in strength at break and in abrasion resistance, and were suitable for use in tires (Examples 1 to 4). In particular, the cyclopentene ring-opening copolymers of Examples 1 to 4 each include the structural unit derived from the norbornene compound with three or more rings, in a predetermined proportion, in the cyclopentene ring-opening copolymer, and accordingly can be said to be effectively enhanced in strength at break and abrasion resistance, in addition to the improvement effect of the wet grip property and the low heat buildup property, obtained by copolymerizing a norbornene compound with cyclopentene.

On the other hand, the cross-linked rubbers obtained by using end-modified styrene-butadiene rubbers were poor both in strength at break and in abrasion resistance (Comparative Examples 1 and 2).

In addition, in the cases where the content of the structural unit derived from a norbornene compound with three or more rings was less than 40 wt%, the obtained cross-linked rubbers were poor in strength at break (Comparative Examples 3 to 5).

## Claims

1. A cyclopentene ring-opening copolymer comprising a structural unit derived from cyclopentene and a structural unit derived from a norbornene compound with three or more rings,

   wherein the structural unit derived from a norbornene compound with three or more rings is a structural unit derived from the compound represented by the following formula (2):

   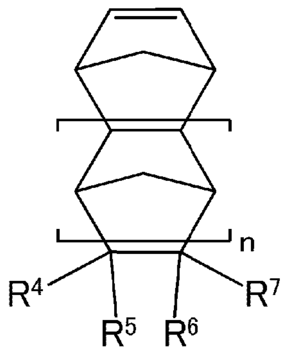

   (2)

   wherein, in the general formula (2), $R^4$ to $R^7$ each independently represent a hydrogen atom, a halogen atom, an optionally substituted hydrocarbon group having 1 to 20 carbon atoms, or a substituent containing a silicon atom, an oxygen atom or a nitrogen atom; $R^4$ and $R^6$, $R^4$ and $R^5$ and/or $R^6$ and $R^7$ may be bonded to each other to form a ring; and n is 1 or 2; and
   wherein the content of the structural unit derived from the norbornene compound with three or more rings falls within a range from 40 to 80 wt% in relation to the whole of the repeating structural units in the cyclopentene ring-opening copolymer.

2. The cyclopentene ring-opening copolymer according to claim 1, wherein the glass transition temperature is -80 to 0°C, as determined by means of differential scanning calorimetry (DSC) at a temperature increase rate of 10 °C/min.

3. The cyclopentene ring-opening copolymer according to claims 1 or 2, wherein the content of aromatic rings in relation to the whole of the cyclopentene ring-opening copolymer is 0 to 40 wt%.

4. The cyclopentene ring-opening copolymer according to any one of claims 1 to 3, having a modifying group at the polymer chain end, wherein the modifying group contains an atom selected from the group consisting of a nitrogen atom, an oxygen atom, a phosphorus atom, a sulfur atom and a silicon atom.

5. The cyclopentene ring-opening copolymer according to claim 4, wherein the modifying group is an oxysilyl group.

6. A rubber composition comprising the cyclopentene ring-opening copolymer according to any one of claims 1 to 5

and silica.

7. The rubber composition according to claim 6, further comprising a cross-linking agent.

8. A cross-linked rubber prepared by cross-linking the rubber composition according to claim 7.

9. A tire comprising the cross-linked rubber according to claim 8.

## Patentansprüche

1. Ein Cyclopentenringöffnungs-Copolymer, umfassend eine von Cyclopenten abgeleitete Struktureinheit und eine von einer Norbornen-Verbindung mit drei oder mehr Ringen abgeleitete Struktureinheit,

   wobei die von einer Norbornenverbindung mit drei oder mehr Ringen abgeleitete Struktureinheit eine Struktureinheit ist, die von der durch die folgende Formel (2) dargestellten Verbindung abgeleitet ist:

   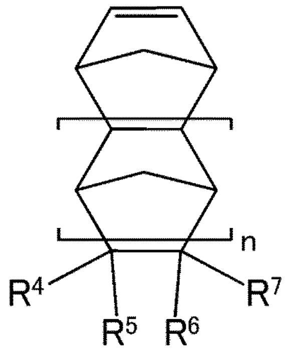

   (2)

   wobei in der allgemeinen Formel (2) $R^4$ bis $R^7$ jeweils unabhängig voneinander ein Wasserstoffatom, ein Halogenatom, eine gegebenenfalls substituierte Kohlenwasserstoffgruppe mit 1 bis 20 Kohlenstoffatomen oder einen Substituenten, der ein Siliziumatom, ein Sauerstoffatom oder ein Stickstoffatom enthält, darstellen; $R^4$ und $R^6$, $R^4$ und $R^5$ und/oder $R^6$ und $R^7$ aneinander unter Bildung eines Rings gebunden sein können; und n 1 oder 2 ist; und
   wobei der Gehalt der Struktureinheit, die von der Norbornenverbindung mit drei oder mehr Ringen abgeleitet ist, in einem Bereich von 40 bis 80 Gew.-% liegt, bezogen auf die Gesamtheit der sich wiederholenden Struktureinheiten in dem Cyclopentenringöffnungs-Copolymer.

2. Das Cyclopentenringöffnungs-Copolymer nach Anspruch 1, wobei die Glasübergangstemperatur -80 bis 0°C beträgt, bestimmt mittels Differential-Scanning-Kalorimetrie (DSC) bei einer Temperaturanstiegsrate von 10°C/min.

3. Das Cyclopentenringöffnungs-Copolymer nach Anspruch 1 oder 2, wobei der Gehalt an aromatischen Ringen, bezogen auf die Gesamtheit des Cyclopentenringöffnungs-Copolymers, 0 bis 40 Gew.-% beträgt.

4. Das Cyclopentenringöffnungs-Copolymer nach einem der Ansprüche 1 bis 3 mit einer modifizierenden Gruppe am Ende der Polymerkette, wobei die modifizierende Gruppe ein Atom enthält, das ausgewählt ist aus der Gruppe bestehend aus einem Stickstoffatom, einem Sauerstoffatom, einem Phosphoratom, einem Schwefelatom und einem Siliziumatom.

5. Das Cyclopentenringöffnungs-Copolymer nach Anspruch 4, wobei die modifizierende Gruppe eine Oxysilylgruppe ist.

6. Eine Kautschukzusammensetzung, umfassend das Cyclopentenringöffnungs-Copolymer nach einem der Ansprüche 1 bis 5 und Siliziumdioxid.

7. Die Kautschukzusammensetzung nach Anspruch 6, die ferner ein Vernetzungsmittel enthält.

**8.** Ein vernetzter Kautschuk, hergestellt durch Vernetzen der Kautschukzusammensetzung nach Anspruch 7.

**9.** Ein Reifen, der den vernetzten Kautschuk nach Anspruch 8 umfasst.

**Revendications**

**1.** Copolymère obtenu par ouverture de cycle du cyclopentène comprenant un motif structurel dérivé de cyclopentène et un motif structurel dérivé d'un composé norbornène ayant trois cycles ou plus,

dans lequel le motif structurel dérivé d'un composé norbornène ayant trois cycles ou plus est un motif structurel dérivé du composé représenté par la formule (2) suivante :

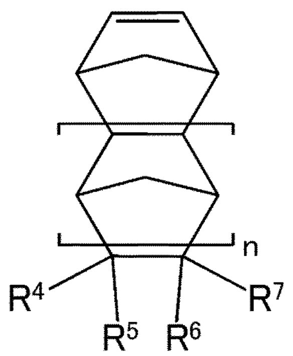

(2)

dans lequel, dans la formule général (2), chacun de $R^4$ à $R^7$ représente indépendamment un atome d'hydrogène, un atome d'halogène, un groupe hydrocarboné éventuellement substitué ayant 1 à 20 atomes de carbone, ou un substituant contenant un atome de silicium, un atome d'oxygène ou un atome d'azote ; $R^4$ et $R^6$, $R^4$ et $R^5$ et/ou $R^6$ et $R^7$ peuvent être liés l'un à l'autre pour former un cycle ; et n vaut 1 ou 2 ; et
dans lequel la teneur en le motif structurel dérivé du composé norbornène ayant trois cycles ou plus est située dans la plage allant de 40 à 80 % en poids par rapport à la totalité des motifs structurels répétitifs dans le copolymère obtenu par ouverture de cycle du cyclopentène.

**2.** Copolymère obtenu par ouverture de cycle du cyclopentène selon la revendication 1, dans lequel la température de transition vitreuse est de -80 à 0°C, telle que déterminée au moyen d'une calorimétrie à balayage différentiel (DSC) à une vitesse de montée en température de 10°C/min.

**3.** Copolymère obtenu par ouverture de cycle du cyclopentène selon la revendication 1 ou 2, dans lequel la teneur en cycles aromatiques par rapport à la totalité du copolymère obtenu par ouverture de cycle du cyclopentène est de 0 à 40 % en poids.

**4.** Copolymère obtenu par ouverture de cycle du cyclopentène selon l'une quelconque des revendications 1 à 3, ayant un groupe modificateur à l'extrémité de chaîne du polymère, dans lequel le groupe modificateur contient un atome choisi dans l'ensemble constitué par un atome d'azote, un atome d'oxygène, un atome de phosphore, un atome de soufre et un atome de silicium.

**5.** Copolymère obtenu par ouverture de cycle du cyclopentène selon la revendication 4, dans lequel le groupe modificateur est un groupe oxysilyle.

**6.** Composition de caoutchouc comprenant le copolymère obtenu par ouverture de cycle du cyclopentène selon l'une quelconque des revendications 1 à 5 et de la silice.

**7.** Composition de caoutchouc selon la revendication 6, comprenant en outre un agent de réticulation.

**8.** Caoutchouc réticulé préparé par réticulation de la composition de caoutchouc selon la revendication 7.

**9.** Pneu comprenant le caoutchouc réticulé selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014133028 A
- JP 6248116 A